(19)

Europäisches
Patentamt
European
Patent Office
Office européen
des brevets

(11) **EP 2 151 270 A1**

(12) **EUROPEAN PATENT APPLICATION**
published in accordance with Art. 153(4) EPC

(43) Date of publication:
**10.02.2010 Bulletin 2010/06**

(21) Application number: **08764788.9**

(22) Date of filing: **28.05.2008**

(51) Int Cl.:
**B01D 39/16** (2006.01)          **B01D 39/14** (2006.01)
**D04H 3/00** (2006.01)          **D04H 3/07** (2006.01)
**D04H 3/14** (2006.01)

(86) International application number:
**PCT/JP2008/059772**

(87) International publication number:
**WO 2008/149737 (11.12.2008 Gazette 2008/50)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **31.05.2007 JP 2007144611
31.05.2007 JP 2007144612**

(71) Applicant: **Toray Industries, Inc.
Tokyo, 103-8666 (JP)**

(72) Inventors:
• ITO, Masashi
Otsu-shi
Shiga 520-8558 (JP)
• KAWAKAMI, Tatsuya
Otsu-shi
Shiga 520-8558 (JP)
• YAKAKE, Yoshikazu
Otsu-shi
Shiga 520-8558 (JP)

(74) Representative: **Prüfer & Partner GbR
European Patent Attorneys
Sohnckestrasse 12
81479 München (DE)**

(54) **NONWOVEN FABRIC FOR CYLINDRICAL BAG FILTER, PROCESS FOR PRODUCING THE SAME, AND CYLINDRICAL BAG FILTER THEREFROM**

(57)     The present invention provides a nonwoven fabric for cylindrical bag filter, wherein a long-fiber nonwoven fabric made of a synthetic fiber is used and the long-fiber nonwoven fabric is a long-fiber nonwoven fabric which is made of a thermoplastic continuous filament and is partially thermocompression-bonded. It is preferable that the circular arc flexural rigidity per basis weight is 0.050 to 1. 000 ((cN/2 cm)/(g/m$^2$)) and the air permeation rate per basis weight is 0 . 010 to 0.500 ((cc/cm$^2$/sec)/(g/m$^2$)). Further, there is provided a method for producing a nonwoven fabric for cylindrical bag filter including the steps of: melt-extruding a thermoplastic polymer through a spinneret; sucking and drawing the extrudate with an air sucker to form a thermoplastic continuous filament; allowing the filament to be subjected to electrification opening and to be piled on a moving collection surface to form a fiber web; and allowing the fiber web to be subjected to pressure welding treatment with a flat roll and partially thermocompression-bonding the fiber web with hot embossing rolls to form a long-fiber nonwoven fabric.

**EP 2 151 270 A1**

## Description

Technical Field

The present invention relates to a nonwoven fabric for cylindrical bag filter excellent in mechanical characteristics and rigidity which is suitable for a cylindrical bag filter for a dust collector, a method for producing the same, and a cylindrical bag filter made of the same.

Background Art

Conventionally, a dust collector for removing and collecting the dust has been used in the working environments where the dust is generated. Various textile fabrics and nonwoven fabrics have been proposed as a filter of a dust collector.

As a shape of the filter, a pleat shape is well-known. For example, in Patent Document 1, a thermocompression-bonding long-fiber nonwoven fabric which is excellent in rigidity is suitably used as a pleat-shaped filter. It is considered that the filtration area of a spunbond pleated bag filter is seemingly large and a size of the dust collector can be reduced. In fact, however, dust is clogged in an accordion-folded portion of the pleats, and leading edges of mountain-folded portions are overlapped by the air and a space between the mountain-folded portions is collapsed. Thus, there is a problem that an actual filtration area is not sufficiently obtained.

Further, Patent Document 2 discloses a felt pleated bag filter for heat resistance in which a nonwoven fabric made of a polyphenylene sulfide (PPS) fiber is impregnated with a synthetic resin at 5 to 50% based on the total weight of the nonwoven fabric. However, the resin is clogged in voids of the nonwoven fabric because the felt is impregnated with the resin. Although the rigidity is obtained, there is a problem that a sufficient air permeation rate is not obtained. Further, since the resin is deteriorated, the filter is not durable against long-term use. Furthermore, it is difficult to dispose PPS and the environmental load at the time of disposal is high.

Patent Document 3 proposes a nonwoven fabric for a filter formed by laminating a plurality of nonwoven fabrics. According to the technique, it is considered that a nonwoven fabric for a filter having a high basis weight is easily produced and a nonwoven fabric for a filter which is excellent in breathability can be obtained. However, the nonwoven fabric proposed in Patent Document 3 is formed by laminating and integrating a nonwoven fabric having a fiber diameter of 7 to 20 $\mu$m and a nonwoven fabric having a fiber diameter of 20 to 50 $\mu$m and thus, it could not sufficiently trap dust having a particle diameter of several micrometers or less. Further, a plurality of nonwoven fabrics should be once produced and then subjected to lamination and integration processing separately and thus, the productivity was not high.

On the other hand, as the filter of a dust collector, there is a cylindrical filter in addition to the pleat-shaped fil.ter. The cylindrical filter does not have the problem that dust is clogged in the pleat-folded portion because of its structure, but as compared to the pleat-shaped filter, the cylindrical filter is inferior to the pleat-shaped filter in form retention.

Patent Document 4 discloses a cylindrical filter formed by winding a plurality of spunbonded nonwoven fabrics made of a long-fiber. Since the filter is formed by superimposing a plurality of nonwoven fabrics, the form retention is improved. However, adjacent nonwoven fabrics are partially heat-adhered and thus there is a problem that dust is clogged in a gap between the nonwoven fabrics. Although the nonwoven fabric disclosed in Patent Document 4 is used for a cylindrical filter, it cannot be accurately said that it is used for the cylindrical filter because the form of a cylindrical body cannot be held by a sheet of the nonwoven fabric.

Further, Patent Document 5 discloses a bag filter in which an intermediate ring is fixed on the body portion of a filter formed by forming a polyester fabric into a cylindrical shape for the purpose of improving the form retention. Since the filtration area is reduced due to the intermediate ring, there is a problem that the filtration efficiency is deteriorated. Furthermore, the bag filter may brush off the dust adhered by a pulsejet. The intermediate ring serves as a folding point of the filter at the time of pulsejetting, which causes the filter to be broken.

Patent Document 1: Japanese Patent No. 3534043
Patent Document 2: Japanese Patent Application Laid-Open (JP-A) No. 11-158776
Patent Document 3: JP-A No. 2004-76212
Patent Document 4: JP-A No. 2006-150222
Patent Document 5: JP-A No. 2007-105655

Disclosure of the Invention

Problems to be Solved by the Invention

In view of the above-described problems, the present invention relates to a nonwoven fabric for cylindrical bag filter which is excellent in mechanical characteristics and rigidity, is suitable for a cylindrical bag filter for a dust collector, is durable against long-term use, and has little clogging of dust as well as a method for producing the nonwoven fabric.

In order to solve the above-described problems, the present invention employs the following means, namely:

(1) A nonwoven fabric for cylindrical bag filter, wherein a long-fiber nonwoven fabric made of a synthetic fiber is used;

(2) The nonwoven fabric for cylindrical bag filter according to the above item (1), wherein the long-fiber nonwoven fabric is a long-fiber nonwoven fabric which is made of a thermoplastic continuous filament and is partially thermocompression-bonded, the circular arc flexural rigidity per basis weight which is obtained from the following equations is 0.050 to 1.000 $((cN/2\ cm)/(g/m^2))$, and the air permeation rate per basis weight is 0.010 to 0.500 $((cc/cm^2/sec)/(g/m^2))$;

$$\mathtt{Circular\ arc\ flexural\ rigidity\ per\ basis\ weight\ ((cN/2}$$
$$\mathtt{cm)/(g/m^2))\ =\ circular\ arc\ flexural\ rigidity\ (cN/2\ cm)/basis}$$
$$\mathtt{weight\ (g/m^2)}$$

$$\mathtt{Air\ permeation\ rate\ per\ basis\ weight}$$
$$\mathtt{((cc/cm^2/sec)/(g/m^2))\ =\ air\ permeation\ rate\ (cc/cm^2/sec)/basis}$$
$$\mathtt{weight\ (g/m^2)}$$

(3) The nonwoven fabric for cylindrical bag filter according to the above item (2), wherein the thermoplastic continuous filament is made of a polyester filament;

(4) The nonwoven fabric for cylindrical bag filter according to any of the above items (1) to (3), wherein the thermoplastic continuous filament is made of a complex-type filament in which a low-melting-point polyester polymer is arranged around a high-melting-point polyester polymer;

(5) The nonwoven fabric for cylindrical bag filter according to any of the above items (1) to (4), wherein the thermoplastic continuous filament is made of an interwoven-type filament of a filament made of the high-melting-point polyester polymer and a filament made of the low-melting-point polyester polymer;

(6) The nonwoven fabric for cylindrical bag filter according to any of the above items (1) to (5), wherein the nonwoven fabric is partially thermocompression-bonded at a compression-bonding area ratio of 5 to 30% throughout the nonwoven fabric;

(7) A method for producing a nonwoven fabric for cylindrical bag filter including the steps of: melt-extruding a thermoplastic polymer through a spinneret; sucking and drawing the extrudate with an air sucker to form a thermoplastic continuous filament; allowing the filament to be subjected to electrification opening and to be piled on a moving collection surface to form a fiber web; and allowing the fiber web to be subjected to pressure welding treatment with a flat roll and partially thermocompression-bonding the fiber web with hot embossing rolls to form a long-fiber nonwoven fabric;

(8) The method for producing a nonwoven fabric for cylindrical bag filter according to the above item (7), wherein the circular arc flexural rigidity per basis weight of the long-fiber nonwoven fabric, which is obtained from the following equations, is 0.050 to 1.000 $((cN/2\ cm)/(g/m^2))$, and the air permeation rate per basis weight is 0.010 to 0.500 $((cc/cm^2/sec)/(g/m^2))$;

$$\mathtt{Circular\ arc\ flexural\ rigidity\ per\ basis\ weight\ ((cN/2}$$
$$\mathtt{cm)/(g/m^2))\ =\ circular\ arc\ flexural\ rigidity\ (cN/2\ cm)/basis}$$
$$\mathtt{weight\ (g/m^2)}$$

Air permeation rate per basis weight

$$((cc/cm^2/sec)/(g/m^2)) = \text{air permeation rate } (cc/cm^2/sec)/\text{basis weight } (g/m^2)$$

(9) The method for producing a nonwoven fabric for cylindrical bag filter according to the above item (7) or (8), wherein the thermoplastic continuous filament is a complex-type filament in which a low-melting-point polyester polymer is arranged around a high-melting-point polyester polymer;

(10) The method for producing a nonwoven fabric for cylindrical bag filter according to any of the above items (7) to (9), wherein the thermoplastic continuous filament is an interwoven-type filament made of a filament made of a high-melting-point polyester polymer and a low-melting-point polyester polymer;

(11) The method for producing a nonwoven fabric for cylindrical bag filter according to any of the above items (7) to (10), wherein the pressure welding treatment with the flat roll includes the steps of heat-pressure welding the fiber web with a pair of flat rolls to form a nonwoven fabric and bringing the nonwoven fabric into contact with the flat roll successively starting from a heat-pressure weld portion; and

(12) A cylindrical bag filter wherein the nonwoven fabric according to the above item (1) is molded into a cylindrical shape.

Effects of the Invention

The nonwoven fabric for cylindrical bag filter of the present invention is excellent in mechanical characteristics and rigidity and is suitable particularly for the cylindrical bag filter for a dust collector and can provide a cylindrical bag filter excellent in form retention and trapping efficiency. Further, an optimal nonwoven fabric for cylindrical bag filter can be obtained by employing the method of the present invention.

Best Modes for Carrying Out the Invention

The nonwoven fabric for cylindrical bag filter of the present invention is the long-fiber nonwoven fabric made of a synthetic fiber.

Examples of a raw resin of the synthetic fiber constituting the long-fiber nonwoven fabric include polyolefines such as polyethylene (PE), polypropylene (PP), an ethylene propylene copolymer and an ethylene-vinyl acetate copolymer; polyamides (PA) such as polycaprolactam (nylon 6), polyhexamethylene adipamide (nylon 66), polyhexamethylene sebacamide (nylon 610), polyundeca 1 lactam (nylon 11) and polydodeca 1 lactam (nylon 12); halogenated polyolefins such as polytetrafluoroethylene and chlorinated polyethylene (CPE); polyethylene terephthalate (PET), which is a polyester polymer, polybutylene terephthalate (PBT), polytrimethylene terphthalate (PTT), polyphenylene sulfide (PPS), polyoxymethylene, polyether ether ketone (PEEK), a liquid crystal polymer, polymethylpentene, polyvinyl alcohol, polyvinylidene chloride, and a fluorine resin. The above-described thermoplastic resins may be used alone or in combination with two or more thereof as a polymer alloy. The most preferable example is a polyester polymer which is excellent in heat resistance because it has a high melting point and is also excellent in rigidity. In this regard, crystalline nucleus agents, delustering agents, pigments, fungicidal agents, antibacterial agents, flame retardants, hydrophilic agents, or the like may be added to the synthetic fiber in the range in which the effect of the present invention is not impaired.

The term "long-fiber" used herein means a continuous filament. In the present invention, a thermoplastic continuous filament is used to produce the nonwoven fabric. Not all of the continuous filaments need to be continuous and they may have some cut parts.

Further, when the thermoplastic continuous filament is melt-spun, the raw resin may be of single or composite component (s) . In a preferred embodiment, two or more raw resins such as the high-melting-point polyester polymer and the low-melting-point polyester polymer are respectively melt-spun and the long-fiber nonwoven fabric is formed as the interwoven-type filament. Further, in the most preferred embodiment, the long-fiber nonwoven fabric is formed as the complex-type filament (so-called sheath-core type composite filament) in which the low-melting-point polyester polymer is arranged around the high-melting-point polyester polymer.

In the interwoven-type or complex-type filaments, when the high-melting-point polyester polymer and the low-melting-point polyester polymer are used, the content ratio of the high-melting-point polyester polymer to the low-melting-point polyester polymer is preferably in the range of 30 : 70 to 95 : 5, more preferably in the range of 40 : 60 to 90 : 10 in weight ratio. Further, an example of the high-melting-point polyester polymer is preferably one containing polyethylene terephthalate, further preferably one containing polyethylene terephthalate as a main component. Here, the content of the main component is preferably 50% by weight or more, more preferably 70% by weight or more, and further preferably 90% by weight or more.

Although the low-melting-point polyester polymer is not particularly limited, a copolymer of polyethylene terephthalate or polybutylene terephthalate is preferable. Here, preferable examples of the polyethylene terephthalate copolymer include a copolymer copolymerized with isophthalic acid or adipic acid. In particular, the copolymer whose copolymerization rate of isophthalic acid or adipic acid is 5 to 20 mol% is more preferable.

Further, the melting points of the high-melting-point polyester polymer and the low-melting-point polyester polymer of the present invention are not particularly limited. The melting point of the high-melting-point polymer is preferably 230 to 290°C, and more preferably 250 to 280°C. The melting point of the low-melting-point polymer is preferably 200 to 260°C, and more preferably 220 to 240°C. The difference between the melting points is preferably 15°C or more, and more preferably 20°C or more. In this regard, the melting point of the polymer in the present invention is measured with a differential scanning type calorimeter under the condition of a rate of temperature increase of 20°C/min and is a temperature giving an extreme value in the obtained melting endothermic curve. Further, a polymer which does not show an extreme value in the melting endothermic curve using the differential scanning type calorimeter is heated on a hot plate, a temperature at which the resin is melted is observed with a microscope, and the temperature is defined as the melting point.

In the present invention, preferred embodiments of the complex-type filament in which the low-melting-point polyester polymer is arranged around the high-melting-point polyester polymer include a filament formed by completely coating the circumference of the high-melting-point polymer with the low-melting-point polymer and a filament formed by intermittently arranging the low-melting-point polymer around the high-melting-point polymer.

In the present invention, the single-fiber fineness of the thermoplastic continuous filament constituting the nonwoven fabric is preferably in the range of 1 to 10 dtex. When the fineness of the thermoplastic continuous filament is less than 1 dtex, the pressure loss of the nonwoven fabric tends to become higher. Additionally, thread breakage is easily caused at the time of production and thus it is not preferable from the viewpoint of production stability. When the fineness of the thermoplastic continuous filament exceeds 10 dtex, the trapping efficiency of the nonwoven fabric tends to decrease. Further, thread breakage due to poor cooling of the filament is easily caused at the time of production and thus it is not preferable from the viewpoint of production stability. The single-fiber fineness is more preferably in the range of 1 to 8 dtex. In this regard, the term "single-fiber fineness" used herein means a value determined in the following manner. That is, 10 pieces of samples are randomly obtained from the nonwoven fabric and 500 to 3000 times magnified photographs of the samples are taken with a scanning electron microscope or the like, followed by randomly selecting 10 fibers (100 fibers in total) from each sample. Then, the thickness thereof is measured. Assuming that the cross section of the fiber is circular, the thickness is defined as a fiber diameter. The fineness is calculated from the fiber diameter calculated by rounding off the average to one decimal place and the density of the polymer, and the resultant value is round off to one decimal place. Further, when a plurality of fibers are interwoven, it is sufficient that the single fiber fineness of respective fibers are within the above-described range.

Furthermore, a sectional shape of the thermoplastic continuous filament has no limitation. Preferred embodiments thereof include a circular shape, a hollow round shape, an elliptical shape, a flat shape, odd-shapes such as an X shape and a Y shape, a multangular shape, and a multileaf shape. In the case where sectional shapes including odd-shapes such as an X shape and a Y shape, the multangular shape and the multileaf shape are employed for the complex-type filament in which the low-melting-point polyester polymer is arranged around the high-melting-point polyester polymer, the filament is preferably present in the vicinity of the peripheral portion of the fiber cross section so that a low-melting-point polyester polymer component can contribute to the thermocompression-bonding to make the thermocompression-bonding of the nonwoven fabric easy.

When the nonwoven fabric for cylindrical bag filter of the present invention is used, it is molded into a cylindrical shape for use. For example, when the nonwoven fabric for cylindrical bag filter is used for a pulsejet dust collector, the fabric is repeatedly used over a long period of time by brushing off the dust deposited on the filter with the pulsejet. For that purpose, it is important that the filter has high form retention without being impaired by repeated use of the pulsejet for a long period of time and maintains its cylindrical shape. For that purpose, it is necessary that the circular arc flexural rigidity per basis weight of the nonwoven fabric for cylindrical bag filter is 0.01 to 0.10 N/2 cm. A conventional method for evaluating the flexural rigidity with flat plates is not an evaluation at the time of using the nonwoven fabric formed into a cylindrical shape. Therefore, it is not suitable as a method for evaluating whether the flexural rigidity is suitable for the nonwoven fabric for cylindrical bag filter. That is, the term "circular arc flexural rigidity" is an indicator which shows the rigidity in a state where the nonwoven fabric is bent in a circular arc shape.

In the case where the circular arc flexural rigidity per basis weight is less than 0.050 $((cN/2\ cm)/(g/m^2))$, the form retention tends to be lower at the time of brushing off the dust with the pulsejet when the nonwoven fabric is used as the cylindrical bag filter for a dust collector and therefore, it is not preferable. With reference to the circular arc flexural rigidity per basis weight, taking the basis weight of the nonwoven fabric and the method of integration into consideration, the circular arc flexural rigidity per basis weight is preferably 0.050 to 1.000 $((cN/2\ cm)/(g/m^2))$. The circular arc flexural rigidity per basis weight is further preferably 0.060 to 0.900 ((cN/2 cm)/(g/m$^2$)), and still further preferably 0.070 to 0.850 ((cN/2 cm)/(g/m$^2$)). Here, the circular arc flexural rigidity per basis weight is calculated by the equation: circular arc flexural rigidity per basis weight ((cN/2 cm)/(g/m$^2$)) = circular arc flexural rigidity (cN/2 cm)/basis weight (g/m$^2$).

Here, in the measurement of the circular arc flexural rigidity per basis weight in the present invention, 5 points of each of a sample (vertical) having a size of 8.4 cm (in a longitudinal (machine) direction of the nonwoven fabric) $\times$ 2 cm (in a width (perpendicular to machine) direction) and a sample (horizontal) having a size of 2 cm (in a longitudinal (machine) direction of the nonwoven fabric) $\times$ 8.4 cm (in a width (perpendicular to machine) direction) are taken at equal intervals in a width direction of a nonwoven fabric sheet. The samples are attached to a support base having a support interval of 8 cm so as to form a circle shape and placed in a compressive elasticity tester. It is confirmed that a load scale indicates zero. Then, the maximum load when the sample is compressed once is read to the first decimal place. When the sample is bent before it shows the maximum value, the value at the time of being bent is read. Averages from values of 5 points obtained respectively in vertical and horizontal directions are rounded off to one decimal place and average maximum loads in vertical and horizontal directions are respectively calculated. Then, the weights of the taken samples in vertical and horizontal directions are respectively measured. Averages in vertical and horizontal directions from values of the obtained 5 points are rounded off to one decimal place. The resultant values are divided by an area of 2 cm $\times$ 8.4 cm and converted into a basis weight per m$^2$. Finally, the obtained average maximum loads are divided by the basis weight. The circular arc flexural rigidity per basis weight is rounded off to four decimal places.

The circular arc flexural rigidity specified by the present invention is obtained by using the long-fiber nonwoven fabric made of a synthetic fiber. Although the method for obtaining the long-fiber nonwoven fabric has no limitation, it is more preferable to obtain the long-fiber nonwoven fabric by the spunbond method from the viewpoint of the rigidity and productivity of the nonwoven fabric. The nonwoven fabric made of a short fiber such as a conventional felt is poor in rigidity of the sheet and thus it is unsuitable. Further, it is preferable that the long-fiber nonwoven fabric is partially heat-sealed. It is more preferable that the long-fiber nonwoven fabric is partially thermocompression-bonded.

Here, the "heat-sealing" process in the present invention is a process for melting and adhering the fiber with rolls and hot air. Among such processes, the process for simultaneously applying pressure and heat with embossing rolls or the like is referred to as a "thermocompression-bonding" process.

In order to allow the circular arc flexural rigidity to be 0.050 or more, the long-fiber nonwoven fabric made of a synthetic fiber may be used. Further, the long-fiber nonwoven fabric may be a long-fiber nonwoven fabric obtained by the spunbond method. Alternatively, the long-fiber nonwoven fabric may be partially heat-sealed or thermocompression-bonded. The circular arc flexural rigidity of the long-fiber nonwoven fabric can be controlled by properly adjusting the degree of the fusion (or thermocompression-bonding) of the heat-sealing (or thermocompression-bonding) and the fusion (or compression-bonding) area ratio.

The air permeation rate per basis weight of the nonwoven fabric for cylindrical bag filter of the present invention is preferably 0.010 to 0.500 ((cc/cm$^2$/sec)/(g/m$^2$)). When the air permeation rate per basis weight is smaller than 0.010 ((cc/cm$^2$/sec)/(g/m$^2$)), the pressure loss as the dust collector becomes high and the operation load of the dust collector becomes large and thus, it is not preferable. Further, when the air permeation rate per basis weight is larger than 0.500 ((cc/cm$^2$/sec)/(g/m$^2$)), the dust leaks significantly, which is not preferable for the bag filter for a dust collector. The air permeation rate per basis weight of the nonwoven fabric for cylindrical bag filter of the present invention is preferably 0.010 to 0.500 ((cc/cm$^2$/sec)/(g/m$^2$)), further preferably 0.015 to 0.450 ((cc/cm$^2$/sec)/(g/m$^2$)), and still further preferably 0.025 to 0.400 ((cc/cm$^2$/sec)/(g/m$^2$)). Here, the air permeation rate per basis weight is calculated by the equation: air permeation rate per basis weight ((cc/cm$^2$/sec)/(g/m$^2$)) = air permeation rate (cc/cm$^2$/sec)/basis weight (g/m$^2$).

It is preferable that the nonwoven fabric for cylindrical bag filter of the present invention is obtained by the spunbond method. The method for integrating the nonwoven fabric is not particularly limited. Preferable examples of the nonwoven fabric include one which is partially thermocompression-bonded using a pair of embossing rolls having an engraved pattern in at least one of the rolls, one which is obtained by allowing high-temperature hot air to pass through a nonwoven fabric sheet and fusing the fibers by a so-called air-through method, and one which is integrated by impregnating with or spraying an adhesive resin. Among them, the nonwoven fabric which is partially thermocompression-bonded using a pair of embossing rolls having an engraved pattern in at least one of the rolls, which has the highest production efficiency, is preferable.

Further, a pre-integration method using a needle punch or a water jet punch, or a pre-integration method using a pair of flat rolls may be used before the integration. Further, the method of partially thermocompression-bonding the nonwoven fabric is not particularly limited.

Then, the surface may be heat-sealed by using calendering rolls with a pair of flat rolls. Preferable examples of the combination of the pair of flat rolls include the combination of rolls made of a metal and the combination of a roll made of a metal and a roll made of a resin. It is preferable that the temperature of the roll made of a metal is lower by 5 to 60°C than the melting point of the resin.

Further, preferable examples of the partial thermocompression-bonding treatment using a pair of embossing rolls having an engraved pattern in at least one of the rolls include the adhesion treatment with hot embossing rolls or the adhesion treatment combining an ultrasonic wave oscillator and embossing rolls. Particularly, the most preferable example is the adhesion treatment with hot embossing rolls from the viewpoint of improving the strength of the nonwoven fabric. It is preferable that the temperature of the heat adhesion with hot embossing rolls is 5 to 60°C lower than the melting point of the polymer having the lowest melting point which is present on the surface of the fiber of the nonwoven fabric. It is more preferable that the temperature is 10 to 50°C lower than the melting point. In the case where the temperature difference between the temperature of the heat adhesion with hot embossing rolls and the melting point of the polymer having the lowest melting point which is present on the surface of the fiber of the nonwoven fabric is less than 5°C, the heat adhesion tends to become too strong and thus, it is not preferable. When the temperature exceeds 60°C, the heat adhesion may become insufficient and thus, it is not preferable.

The compression-bonding area ratio in the partial thermocompression-bonding of the nonwoven fabric for cylindrical bag filter of the present invention is a percentage of the area of the thermocompression-bonded portion to the total area of the nonwoven fabric. It is preferably in the range of 5 to 30% based on the total area of the nonwoven fabric. When the compression-bonding area ratio is 5% or more, the strength of the nonwoven fabric is sufficiently obtained. Further, the surface is not easily fluffed. When the compression-bonding area ratio is 30% or less, voids between fibers are decreased, the pressure loss is increased, and the trapping efficiency is not reduced. The compression-bonding area ratio is more preferably 6 to 20%, and most preferably 8 to 13%.

A cavity is formed on the thermocompression-bonded portion. It is formed in a manner that thermoplastic continuous filaments constituting the nonwoven fabric are fused by heat and pressure. That is, the portion in which the thermoplastic continuous filaments are fused and aggregated as compared to other portions is the thermocompression-bonded portion. When the adhesion treatment with hot embossing rolls is employed as the method of thermocompression-bonding, the portion in which the thermoplastic continuous filaments are fused and aggregated by the convex portion of the embossing roll is the thermocompression-bonded portion. For example, in the case where a roll having a predetermined pattern of a concavo-convex shape is used only at the upper or lower side and a flat roll without a concavo-convex shape is used as another roll, the thermocompression-bonded portion is a portion in which the thermoplastic continuous filaments of the nonwoven fabric are aggregated by thermocompression-bonding with the convex portion of the roll having a concavo-convex shape and the flat roll. Further, for example, in the case of using an embossing roll which consists of a pair of an upper roll and a lower roll in which a plurality of linear grooves arranged parallel to each other are formed on the surface and in which grooves of the upper roll and grooves of the lower roll are provided so as to cross at a certain angle, the thermocompression-bonded portion is a portion in which the thermoplastic continuous filaments of the nonwoven fabric are aggregated by thermocompression-bonding with the convex portion of the upper roll and the convex portion of the lower roll. In this case, a portion to be pressure-welded with an upper convex portion and a lower concave portion or the upper concave portion and the lower convex portion is not included in the term "thermocompression-bonded portion" used herein.

The shape of the thermocompression-bonded portion in the nonwoven fabric for a filter of the present invention is not particularly specified. When the roll having a predetermined pattern of a concavo-convex shape is used only at the upper or lower side and the flat roll without a concavo-convex shape is used as another roll or when the embossing roll which consists of a pair of an upper roll and a lower roll in which a plurality of linear grooves arranged parallel to each other are formed on the surface and in which grooves of the upper roll and grooves of the lower roll are provided so as to cross at a certain angle is used and thermocompression-bonded with the convex portion of the upper roll and the convex portion of the lower roll, the shape of the thermocompression-bonded portion may be circular, triangular, quadrangular, parallelogrammic, elliptical, or rhombic. The arrangement of these thermocompression-bonded portions is not particularly specified and the portions may be arranged at regular intervals or in random order, or different shapes may be intermingled. Particularly, the thermocompression-bonded portions are preferably arranged at regular intervals from the viewpoint of the evenness of the nonwoven fabric. From the viewpoint of partially thermocompression-bonding the nonwoven fabric without allowing it to be peeled, a preferable example is the thermocompression-bonded portion having a parallelogrammic shape which is formed by thermocompression-bonding with the convex portion of the upper roll and the convex portion of the lower roll using the embossing roll which consists of a pair of an upper roll and a lower roll in which a plurality of linear grooves arranged parallel to each other are formed on the surface and in which grooves of the upper roll and grooves of the lower roll are provided so as to cross at a certain angle.

The basis weight of the nonwoven fabric of the present invention is preferably in the range of 90 to 350 g/m$^2$. When the basis weight is 90 g/m$^2$ or more, rigidity is obtained and there is no tendency of decrease of the trapping efficiency. When the basis weight is 350 g/m$^2$ or less, there is a low possibility that the pressure loss increases because the basis weight is too high and it is also preferable from the viewpoint of cost. More preferably, the basis weight is in the range of 100 to 320 g/m$^2$. Further preferably, the basis weight is in the range of 150 to 260 g/m$^2$. The basis weight used herein is determined by obtaining 3 samples with a size of 50 cm (vertical) $\times$ 50 cm (horizontal), measuring the respective weights, converting the average of the obtained values into a value per unit area, and rounding off the converted value to one decimal place.

Next, the method for producing a nonwoven fabric for cylindrical bag filter of the present invention will be described.

It is preferable that the nonwoven fabric for cylindrical bag filter of the present invention is a long-fiber nonwoven fabric and the long-fiber nonwoven fabric is preferably produced by the spunbond method. A preferred embodiment of the method for producing a nonwoven fabric for cylindrical bag filter of the present invention includes the steps of melt-extruding a thermoplastic polymer through a spinneret, sucking and drawing the extrudate with an air sucker to form a thermoplastic continuous filament, allowing the filament to be subjected to electrification opening and to be piled on a moving collection surface to form a fiber web, and allowing the fiber web to be subjected to pressure welding treatment with a flat roll and partially thermocompression-bonding the fiber web with hot embossing rolls to form a nonwoven fabric.

Examples of the thermoplastic continuous filament include filaments which is made of polyolefines such as polyethylene (PE), polypropylene (PP), an ethylene propylene copolymer and an ethylene-vinyl acetate copolymer; polyamides (PA) such as polycaprolactam (nylon 6), polyhexamethylene adipamide (nylon 66), polyhexamethylene sebacamide (nylon 610), polyundeca 1 lactam (nylon 11) and polydodeca 1 lactam (nylon 12); halogenated polyolefins such as polytetrafluoroethylene and chlorinated polyethylene (CPE); polyethylene terephthalate (PET), which is a polyester polymer, polybutylene terephthalate (PBT), polytrimethylene terphthalate (PTT), polyphenylene sulfide (PPS), polyoxymethylene, polyether ether ketone (PEEK), a liquid crystal polymer, polymethylpentene, polyvinyl alcohol, polyvinylidene chloride, and a fluorine resin. The above-described thermoplastic resins may be used alone or in combination with two or more thereof as a polymer alloy. Although those filaments are not particularly limited, the interwoven-type filament made of the filament made of the high-melting-point polyester polymer and the low-melting-point polyester polymer or the complex-type filament in which the low-melting-point polyester polymer is arranged around the high-melting-point polyester polymer is preferred. Most preferably, the complex-type filament in which the low-melting-point polyester polymer is arranged around the high-melting-point polyester polymer is employed. When the complex-type filament in which the low-melting-point polyester polymer is arranged around the high-melting-point polyester polymer is partially thermocompression-bonded with hot embossing rolls, the nonwoven fabric is integrated by melt deformation of a low-melting-point polymer component, and a high-melting-point polymer component is hardly thermally damaged. For this reason, the nonwoven fabric is easily integrated and thus it is preferable.

In the present invention, it is preferable that the thermoplastic continuous filament is obtained by the method including the steps of melt-extruding a thermoplastic polymer through a spinneret, and sucking and drawing the extrudate with an air sucker.

By allowing the thermoplastic continuous filament to be subjected to electrification opening and then forming a fiber web, formation of a bunch-like fiber is reduced, the surface area of the fiber per unit weight becomes large and the trapping efficiency when the fiber is made into the nonwoven fabric is improved. Although the electrification method of the thermoplastic continuous filament has no limitation, the electrification by corona discharge and the electrification by frictional electrification with a metal are preferable. In the corona discharge method, it is preferable to make the filament electrostatically charged at a voltage of -10 to -50 kV.

In the method for producing the nonwoven fabric for a filter of the present invention, the pressure welding treatment with the flat roll has no limitation as long as it brings the fiber web into contact with the flat roll. It is preferable to use a heat-sealing processing which brings the fiber web into contact with a heated flat roll. It is preferable that the surface temperature of the flat roll at the time of heat-sealing with the heated flat roll is 50 to 180°C lower than the melting point Tm of the resin having the lowest melting point which is present on the surface of the fiber of the fiber web. That is, the surface temperature of the flat roll is preferably (Tm - 50) °C to (Tm - 180) °C, more preferably (Tm - 60) °C to (Tm - 170) °C, and most preferably (Tm - 70)°C to (Tm - 130)°C. When the heat-sealing temperature is lower than (Tm - 180) °C, the heat treatment of the fiber web becomes insufficient and the trapping efficiency improving effect may not be sufficient and thus, it is not preferable. When the heat-sealing temperature is higher than (Tm - 50) °C, the heat seal becomes too strong. When the heat sealing of the fiber constituting the surface portion is facilitated, the fused portion is increased. When the surface area of the fiber is decreased, the contact area with the dust is decreased and the trapping efficiency is reduced. Further, when the fiber is fused and voids between fibers are decreased, the pressure loss is increased and thus, it is not preferable.

Excessive fusion of fibers can be prevented by the pressure welding treatment with the flat roll. The treatment is effective in preventing a decrease of the surface area of the fiber, a decrease of the contact area with the dust, and a reduction of the trapping efficiency. Thus, the improvement in the trapping efficiency by the heat treatment becomes sufficient.

Further, the time taken for bringing the flat roll into contact with the fiber web and heat-sealing the fiber web is preferably in the range of 0.1 to 200 seconds. When the time of heat-sealing is 0.1 seconds or more, a heat-sealing effect of the nonwoven fabric is sufficiently obtained and the trapping efficiency improving effect becomes sufficient. When the time of heat treatment is 200 or less seconds, the heat seal does not become too strong and the pressure loss does not become too high. More preferably, the heat treatment time is from 1 to 100 seconds. Further preferably, the heat treatment time is from 2 to 50 seconds.

As for the pressure welding treatment with the flat roll in the method for producing the nonwoven fabric for a filter of the present invention, the most preferable is the method including the steps of heat-pressure welding the fiber web with a pair of flat rolls to form a nonwoven fabric and bringing the nonwoven fabric into contact with the flat roll successively starting from a heat-pressure weld portion. That is, the method including the steps of heat-pressure welding the fiber web with a pair of flat rolls to form a nonwoven fabric, bringing one side of the nonwoven fabric into contact with one roll of the pair of flat rolls successively starting from a heat-pressure weld portion, and heat-sealing the fabric is preferable. As the method for contacting the fabric with the roll, there is generally used a method for bringing the fabric into contact with one roll of the flat rolls so as to follow the roll after passing the fabric between the pair of flat rolls. However, any method, such as a method of winding the fabric around a pair of flat rolls into an S or inverted S-shape, may be used as long as the nonwoven fabric is brought into contact with one roll of the pair of flat rolls successively starting from a heat-pressure weld portion and heat-sealed. The linear pressure at the time of pressure-welding with the pair of flat rolls is preferably in the range of 1 to 100 kg/cm, and more preferably in the range of 2 to 80 kg/cm. In the case where the linear pressure is 1 kg/cm or more, a sufficient linear pressure for the sheet formation is obtained. When the linear pressure is 100 kg/cm or less, the adhesion of the nonwoven fabric does not become too strong and therefore, the pressure loss does not become too high.

Further, it is preferable to bring the nonwoven fabric into contact with the flat roll successively starting from the heat-pressure weld portion in a state that a tension of 5 to 200 N/m is applied in a running direction of the nonwoven fabric. When the tension is 5 N/m or more, a tendency that the nonwoven fabric winds around the flat rolls lessens and thus, it is preferable. When the tension is 200 N/m or less, the nonwoven fabric is hardly cut, which is a preferable. More preferably, the tension is in the range of 8 to 180 N/m.

Further, in bringing the nonwoven fabric into contact with the flat roll successively starting from the heat-pressure weld portion, the contact distance is preferably in the range of 2 to 250 cm. When the contact distance is 2 cm or more, the heat treating effect becomes sufficient and a sufficient trapping efficiency is obtained. When the contact distance is 250 cm or less, the heat treatment is too strong and the pressure loss does not become high. More preferably, the contact distance is in the range of 4 to 200 cm.

Since the nonwoven fabric for cylindrical bag filter of the present invention is excellent in rigidity, it is excellent in form retention at the time of being used as a cylindrical bag filter after backwashing air. Therefore, it is preferable that the nonwoven fabric for cylindrical bag filter of the present invention is used as a bag filter of a dust collector. The dust collector referred herein is used for the purpose of removing and collecting dust in working environments where the dust is generated, for example, factories and construction sites. A dust collector having a large number of cylindrical, sac-shaped or plate-shaped filters in its case body is preferred. Among them, a dust collector using a cylindrical filter is preferred from the viewpoint of the filtration area and maintenance. Further, the method of brushing off the dust with the dust collector is not particularly limited. Preferable examples thereof include a method in which the dust falls naturally under its own weight, a back washing method in which the differential pressure of the dust collector is utilized, and a so-called pulsejet method in which air is reversely jetted from the inside of the filter and the dust deposited on the filter is forcibly brushed off. Among them, the pulsejet method is more preferable from the viewpoint of the dust collection efficiency and the long life of the filter.

The cylindrical bag filter of the present invention is preferably formed by integrating a sheet of nonwoven fabric. The shape is preferably sac-shaped, envelope-shaped, or cylindrical. Among them, the bag filter having a cylindrical shape is more preferable from the viewpoint of dust brushing performance. As for the method which forms the nonwoven fabric into a cylindrical shape, a method in which a longitudinal direction of the nonwoven fabric is defined as the circumferential direction and a method in which a width direction is defined as the circumferential direction are listed. From the viewpoint that the fabric can be successively processed into a cylindrical shape, the method in which a width direction is defined as the circumferential direction is preferable.

The molding method of the cylindrical bag filter is not particularly specified, but it is preferable to use a molding method in which the fusion is performed by heat-sealing, a molding method in which an ultrasonic-bonding technique using an ultrasonic-bonding machine is performed, a molding method in which an adhesion technique using adhesives is performed, or a molding method in which sewing is performed. It is more preferable to use a molding method which combines these adhesion methods.

Further, a protective material may be used for the upper and lower ends of the cylindrical portion. The protective material may be either a material made of a cap resin or a felt-like material which covers the spunbond of the end portion.

In the bag filter for a dust collector, the brush-off treatment with backwashing air is performed to remove the dust deposited on the surface of the filter while in use. Thus, it is preferable to use the nonwoven fabric of the present invention which is excellent in strength.

As the most preferred embodiment in the present invention, a nonwoven fabric obtained by heat-sealing a long-fiber nonwoven fabric made of polyester with a flat roll and partially thermocompression-bonding the fabric with embossing rolls is used. In the most preferable embodiment, the obtained long-fiber nonwoven fabric is molded into a cylindrical shape using an ultrasonic-bonding machine in a manner that the horizontal direction of the nonwoven fabric is used as a circumferential direction of the cylinder and a cylindrical bottom portion is covered with a nonwoven fabric made of felt. The obtained nonwoven fabric is excellent in the circular arc flexural rigidity and breathability. The use of a cylindrical bag filter made of the nonwoven fabric allows for production of a filter excellent in the brush-off treatment with backwashing air to remove the dust deposited on the surface of the filter.

Examples

Hereinafter, the present invention will be specifically described with reference to examples, but the invention is not to be construed as being limited thereto. In this regard, respective characteristic values in examples as described below were measured by the following method.

(1) Melting point (°C)

The melting point was measured with a differential scanning type calorimeter (DSC-2 type, manufactured by Perkin Elmer) under the condition of a rate of temperature increase of 20°C/min. A temperature giving an extreme value in the obtained melting endothermic curve was defined as a melting point. Further, a resin which did not show an extreme value in the melting endothermic curve using the differential scanning type calorimeter was heated on a hot plate. A temperature at which the resin was melted was observed with a microscope and the temperature was defined as a melting point.

(2) Intrinsic viscosity IV

The intrinsic viscosity of polyester was measured by the following method.
In 100 mL of orthochlorophenol was dissolved 8 g of a sample. A relative viscosity $\eta_r$ was determined at 25°C using an Ostwald viscometer by the following equation.

$$\eta_r = \eta/\eta_0 = (t \times d)/(t_0 \times d_0)$$

In the equation, $\eta$ is the viscosity of the polymer solution, $\eta_0$ is the viscosity of orthochlorophenol, t is the falling time (second) of the solution, d is the density (g/cm$^3$) of the solution, $t_0$ is the falling time (second) of orthochlorophenol, and do is the density (g/cm$^3$) of orthochlorophenol.
Then, the intrinsic viscosity IV was calculated by the following equation based on the relative viscosity $\eta_r$.

$$IV = 0.0242 \eta_r + 0.2634$$

(3) Fineness (dtex)

From a nonwoven fabric, 10 pieces of samples are randomly obtained and 500 to 3000 times magnified photographs of the samples are taken with a scanning electron microscope, followed by randomly selecting 10 fibers (100 fibers in total) from each sample. Then, the thickness thereof is measured. Assuming that the cross section of the fiber is circular, the thickness is defined as a fiber diameter. The fineness is calculated from the fiber diameter calculated by rounding off the average to one decimal place and the density of the polymer, and the resultant value is round off to one decimal place.

(4) Basis weight (g/m$^2$)

First, 3 samples with a size of 50 cm (in the vertical direction) $\times$ 50 cm (in the horizontal direction) were obtained and the weights of respective samples were respectively measured. The average of the obtained values was converted into a value per unit area and the resultant value was rounded off to one decimal place.

(5) Tensile strength (N/5 cm)

First, 3 samples with a size of 5 cm $\times$ 30 cm in the vertical and horizontal directions of the sheet were subjected to tensile test under conditions of a grip interval of 20 cm and a tension rate of 10 cm/min using a constant-rate-extension tensile testing machine. The maximum strength when the samples were pulled until they were fractured was defined as a tensile strength. Respective average values in the vertical and horizontal directions of the sheet were calculated by rounding off the values to one decimal place.

(6) Circular arc flexural rigidity per basis weight ($(cN/2\ cm)/(g/m^2)$)

In the measurement of the circular arc flexural rigidity per basis weight, 5 points of each of a sample (vertical) having a size of 8.4 cm (in a longitudinal (machine) direction of the nonwoven fabric) $\times$ 2 cm (in a width (perpendicular to machine) direction) and a sample (horizontal) having a size of 2 cm (in a longitudinal (machine) direction of the nonwoven fabric) $\times$ 8.4 cm (in a width (perpendicular to machine) direction) are taken at equal intervals in a width direction of a nonwoven fabric sheet. The samples are attached to a support base having a support interval of 8 cm so as to form a circle shape and placed in a compressive elasticity tester. It is confirmed that a load scale indicates zero. Then, the maximum load when the sample is compressed once is read to the first decimal place. When the sample is bent before it shows the maximum value, the value at the time of being bent is read. Averages from values of 5 points obtained respectively in vertical and horizontal directions are rounded off to one decimal place and average maximum loads in vertical and horizontal directions are respectively calculated. Then, the weights of the obtained samples in vertical and horizontal directions are respectively measured. Averages in vertical and horizontal directions from values of the obtained 5 points are rounded off to one decimal place. The resultant values are divided by an area of 2 cm $\times$ 8.4 cm and converted into a basis weight per $m^2$. Finally, the obtained average maximum loads are divided by the basis weight. The circular arc flexural rigidity per basis weight is rounded off to four decimal places.

(7) Air permeation rate ($cc/cm^2/sec$)

First, 10 pieces of samples with a size of 10 cm $\times$ 10 cm were obtained from optional portions of the nonwoven fabric and the air permeation rate was measured by Frajour type test based on JIS-L1906 (the 2000 edition) . The pressure setting at the time of measurement is 125 Pa. The air permeation rate is calculated by rounding off the average of the air permeation rates of the obtained 10 points to one decimal place.

(8) Air permeation rate per basis weight ($(cc/cm^2/sec)/(g/m^2)$)

The value of the air permeation rate obtained in (7) Air permeation rate as described above is divided by the value of the basis weight obtained in (4) Basis weight as described above. The air permeation rate per basis weight is rounded off to four decimal places.

Example 1

Polyethylene terephthalate (PET) having an intrinsic viscosity (IV) of 0.65 and a melting point of 260°C was dried to have a moisture content of not more than 50 ppm by weight and melted at 295°C, which was spun-extruded from a pore at a spinneret temperature of 300°C. Thereafter, a circular section-shaped filament was spun and opened by an air sucker at a spinning rate of 4400 m/min, which was trapped as a fiber web on a moving net conveyor. The trapped fiber web was thermocompression-bonded with a convex portion of an upper roll and a convex portion of a lower roll using an embossing roll which consisted of a pair of an upper roll and a lower roll in which a plurality of linear grooves arranged parallel to each other were formed on the surface and in which grooves of the upper roll and grooves of the lower roll were provided so as to cross at a certain angle. The fiber web was thermocompression-bonded with embossing rolls adjusted so as to have a compression-bonding area ratio of 18% under conditions of a temperature of 240°C and a linear pressure of 70 kg/cm to obtain a spunbonded nonwoven fabric having a fineness of 2 dtex and a basis weight of 260 $g/m^2$.

Example 2

Polyethylene terephthalate (PET) having an intrinsic viscosity (IV) of 0.65 and a melting point of 260°C was dried to have a moisture content of not more than 50 ppm by weight and melted at 295°C, which was spun-extruded from a pore at a spinneret temperature of 300°C. Thereafter, a circular section-shaped filament was spun and opened by an air sucker at a spinning rate of 4400 m/min, which was trapped as a fiber web on a moving net conveyor. The trapped fiber web was needle-punched at a punching density of 80 punches/$cm^2$ with a needle punch machine and the fiber was entangled, followed by thermocompression-bonding with embossing rolls adjusted so as to have a compression-bonding area ratio of 24% using an embossing roll having a weave pattern at the upper side and a flat roll without a concavo-convex shape at the lower side under conditions of a temperature of 240°C and a linear pressure of 60 kg/cm to obtain a spunbonded nonwoven fabric having a fineness of 5 dtex and a basis weight of 300 $g/m^2$.

Example 3

Polyethylene terephthalate (PET) having an intrinsic viscosity (IV) of 0.65 and a melting point of 260°C which was dried to have a moisture content of not more than 50 ppm by weight and copolymer polyester (CO-PET) having an intrinsic viscosity (IV) of 0.66, 11 mol% of an isophthalic acid copolymerization rate, and a melting point of 230°C which was dried to have a moisture content of not more than 50 ppm by weight were melted at 295°C and 280°C, respectively. Then, polyethylene terephthalate as a core component and copolymer polyester as a sheath component were spun-extruded from a pore at a spinneret temperature of 300°C at a weight ratio of core : sheath = 80 : 20. Thereafter, a circular section-shaped filament was spun with an air sucker at a spinning rate of 4300 m/min. The resultant product was subjected to electrification opening at a voltage of -30 kV by the corona discharge method, which was trapped as a fiber web on the moving net conveyor. The trapped fiber web was thermocompression-bonded with a convex portion of an upper roll and a convex portion of a lower roll using an embossing roll which consisted of a pair of an upper roll and a lower roll in which a plurality of linear grooves arranged parallel to each other were formed on the surface and in which grooves of the upper roll and grooves of the lower roll were provided so as to cross at a certain angle. The fiber web was thermocompression-bonded with embossing rolls adjusted so as to have a compression-bonding area ratio of 10% under conditions of a temperature of 190°C and a linear pressure of 70 kg/cm to obtain a spunbonded nonwoven fabric having a fineness of 2 dtex and a basis weight of 260 g/m$^2$.

Example 4

Polyethylene terephthalate (PET) having an intrinsic viscosity (IV) of 0.65 and a melting point of 260°C which was dried to have a moisture content of not more than 50 ppm by weight and copolymer polyester (CO-PET) having an intrinsic viscosity (IV) of 0.66, 11 mol% of an isophthalic acid copolymerization rate, and a melting point of 230°C which was dried to have a moisture content of not more than 50 ppm by weight were melted at 295°C and 280°C, respectively. Then, polyethylene terephthalate as a core component and copolymer polyester as a sheath component were spun-extruded from a pore at a spinneret temperature of 300°C at a weight ratio of core : sheath = 50 : 50. Thereafter, a circular section-shaped filament was spun with an air sucker at a spinning rate of 4300 m/min. The resultant product was subjected to electrification opening at a voltage of -30 kV by the corona discharge method, which was trapped as a fiber web on the moving net conveyor. After passing the air (hot air temperature: 300°C) through the sheet, the trapped fiber web was thermocompression-bonded using calendering rolls with a pair of flat rolls under conditions of a temperature of 170°C and a linear pressure of 50 kg/cm to obtain a spunbonded nonwoven fabric having a fineness of 5 dtex and a basis weight of 350 g/m$^2$.

Example 5

Polyethylene terephthalate (PET) having an intrinsic viscosity (IV) of 0.65 and a melting point of 260°C was dried to have a moisture content of not more than 50 ppm by weight and melted at 295°C, which was spun-extruded from a pore at a spinneret temperature of 300°C. Thereafter, a circular section-shaped filament was spun and opened by an air sucker at a spinning rate of 4400 m/min, which was trapped as a fiber web on a moving net conveyor. A powdered resin of polyester was sprayed to the trapped fiber web, followed by thermocompression-bonding with embossing rolls adjusted so as to have a compression-bonding area ratio of 17% using an embossing roll having a round shape at the upper side and a flat roll without a concavo-convex shape at the lower side under conditions of a temperature of 240°C and a linear pressure of 60 kg/cm to obtain a spunbonded nonwoven fabric having a fineness of 2 dtex and a basis weight of 230 g/m$^2$.

[Table 1]

| | | Example 1 | Example 2 | Example 3 | Example 4 | Example 5 | Comparative Example 1 | Comparative Example 2 |
|---|---|---|---|---|---|---|---|---|
| Fineness (dtex) | | 2.0 | 5.0 | 2.8 | 5.0 | 2.0 | 2.0 | 2.0 |
| Basis weight (g/m$^2$) | | 260 | 300 | 260 | 350 | 230 | 500 | 550 |
| Tensile strength (N/5 cm) | Vertical | 600 | 1170 | 1200 | 1030 | 600 | 1200 | 1500 |
| | Horizontal | 220 | 660 | 730 | 600 | 500 | 600 | 800 |
| Circular arc flexural rigidity per basis weight (cN/2 cm)/(g/m$^2$) | Vertical | 0.223 | 0.080 | 0.255 | 0.734 | 0.258 | 0.035 | 0.212 |
| | Horizontal | 0.080 | 0.052 | 0.101 | 0.535 | 0.247 | 0.009 | 0.150 |
| Air permeation rate per basis weight (cc/cm$^2$/sec)/(g/m$^2$) | | 0.025 | 0.137 | 0.038 | 0.039 | 0.032 | 0.019 | 0.009 |
| Dust brushing test | | Good | Good | Good | Good | Good | Clogged | Clogged |

The characteristics of the obtained nonwoven fabrics are as shown in Table 1 and all of the nonwoven fabrics of Examples 1, 2, 3, 4, and 5 were excellent in circular arc flexural rigidity per basis weight. Further, the air permeation rates per basis weight were good and 0.025, 0.137, 0.038, 0.039, and 0.032 ((cc/cm$^2$/sec)/(g/m$^2$)), respectively.

Comparative Example 1

Polyethylene terephthalate (PET) having an intrinsic viscosity (IV) of 0.65 and a melting point of 260°C was dried to have a moisture content of not more than 50 ppm by weight and spun. Then, a polyethylene terephthalate short fiber having a fineness of 2 dtex, a cut length of 51 mm, and a number of crimp of 14 crimps/2.54 cm was used to produce a spun yarn having a single yarn count of 20 s and a number of strands of 2. The spun yarns were flat-woven to obtain a polyethylene terephthalate spun yarn fabric. Subsequently, while overfeeding was applied at 120°C, the heat setting was performed for 45 seconds and a base fabric having a warp density of 26 threads/2.54 cm and a weft density of 18 threads/2.54 cm was formed. A web in which a polyethylene terephthalate fiber having a fineness of 2.0 d, a cut length of 51 mm and a number of crimp of 14 crimps/2.54 cm, and having a circular section was used was laminated on the base fabric. Then, the base fabric was interlaced with the web by needle punching to obtain a needle felt. Further, the felt was subjected to singeing treatment with burner flame, followed by pressing with a hot roll having a surface temperature of 200°C. As a result, a short-fiber nonwoven fabric having a basis weight of 500 g/m$^2$ and a thickness of 1.71 mm was obtained.

Comparative Example 2

The short-fiber nonwoven fabric of Comparative Example 1 was impregnated with a bisphenol A type epoxy resin at a ratio of 10% based on the total weight of the short-fiber nonwoven fabric, which was dried at 180°C for 3 minutes.
The characteristics of the obtained nonwoven fabrics are shown in Table 1. The air permeation rate per basis weight of the nonwoven fabric obtained in Comparative Example 1 is 0.019 ((cc/cm$^2$/sec)/(g/m$^2$)), which is preferable. However, the circular arc flexural rigidity per basis weight is 0. 009 ((cN/2 cm)/(g/m$^2$)), which is not durable against use. Further, the circular arc flexural rigidity per basis weight of the nonwoven fabric obtained in Comparative Example 2 is 0.212 ((cN/2 cm)/(g/m$^2$)), which is preferable. However, the air permeation rate per basis weight is 0 . 009 ((cc/cm$^2$/sec) /(g/m$^2$)), which very easily causes clogging.

Industrial Applicability

Since the cylindrical bag filter of the present invention is a nonwoven fabric for cylindrical bag filter which is excellent in mechanical characteristics and rigidity, is durable against long-term use, and has little clogging of dust, it can be suitably used particularly as a filter for an industrial dust collector.

Table 1

| | Example 1 | Example 2 | Example 3 | Example 4 | Example 5 | Comparative Example 1 | Comparative Example 2 |
|---|---|---|---|---|---|---|---|
| Fineness (dtex) | 2.0 | 5.0 | 2.8 | 5.0 | 2.0 | 2.0 | 2.0 |
| Basis weight (g/m$^2$) | 260 | 300 | 260 | 350 | 230 | 500 | 550 |
| Tensile strength (N/5 cm) — Vertical | 600 | 1170 | 1200 | 1030 | 600 | 1200 | 1500 |
| Tensile strength (N/5 cm) — Horizontal | 220 | 660 | 730 | 600 | 500 | 600 | 800 |
| Circular arc flexural rigidity per basis weight (cN/2 cm)/(g/m$^2$) — Vertical | 0.223 | 0.080 | 0.255 | 0.734 | 0.258 | 0.035 | 0.212 |
| Circular arc flexural rigidity per basis weight (cN/2 cm)/(g/m$^2$) — Horizontal | 0.080 | 0.052 | 0.101 | 0.535 | 0.247 | 0.009 | 0.150 |
| Air permeation rate per basis weight (cc/cm$^2$/sec)/(g/m$^2$) | 0.025 | 0.137 | 0.038 | 0.039 | 0.032 | 0.019 | 0.009 |
| Dust brushing test | Good | Good | Good | Good | Good | Clogged | Clogged |

**Claims**

1. A nonwoven fabric for cylindrical bag filter, wherein a long-fiber nonwoven fabric made of a synthetic fiber is used.

2. The nonwoven fabric for cylindrical bag filter according to claim 1, wherein the long-fiber nonwoven fabric is a long-fiber nonwoven fabric which is made of a thermoplastic continuous filament and is partially thermocompression-bonded, the circular arc flexural rigidity per basis weight which is obtained from the following equations is 0.050 to 1.000 ((cN/2 cm)/(g/m$^2$)), and the air permeation rate per basis weight is 0.010 to 0.500 ((cc/cm$^2$/sec)/(g/m$^2$)).

$$\text{Circular arc flexural rigidity per basis weight ((cN/2 cm)/(g/m}^2\text{)) = circular arc flexural rigidity (cN/2 cm)/basis weight (g/m}^2\text{)}$$

$$\text{Air permeation rate per basis weight ((cc/cm}^2\text{/sec)/(g/m}^2\text{)) = air permeation rate (cc/cm}^2\text{/sec)/basis weight (g/m}^2\text{)}$$

3. The nonwoven fabric for cylindrical bag filter according to claim 2, wherein the thermoplastic continuous filament is made of a polyester filament.

4. The nonwoven fabric for cylindrical bag filter according to any of claims 1 to 3, wherein the thermoplastic continuous filament is made of a complex-type filament in which a low-melting-point polyester polymer is arranged around a high-melting-point polyester polymer.

5. The nonwoven fabric for cylindrical bag filter according to any of claims 1 to 4, wherein the thermoplastic continuous filament is made of an interwoven-type filament of a filament made of the high-melting-point polyester polymer and a filament made of the low-melting-point polyester polymer.

6. The nonwoven fabric for cylindrical bag filter according to any of claims 1 to 5, wherein the nonwoven fabric is partially thermocompression-bonded at a compression-bonding area ratio of 5 to 30% throughout the nonwoven fabric.

7. A method for producing a nonwoven fabric for cylindrical bag filter comprising the steps of:

   melt-extruding a thermoplastic polymer through a spinneret;
   sucking and drawing the extrudate with an air sucker to form a thermoplastic continuous filament;
   allowing the filament to be subjected to electrification opening and to be piled on a moving collection surface to form a fiber web; and
   allowing the fiber web to be subj ected to pressure welding treatment with a flat roll and partially thermocompression-bonding the fiber web with hot embossing rolls to form a long-fiber nonwoven fabric.

8. The method for producing a nonwoven fabric for cylindrical bag filter according to claim 7, wherein the circular arc flexural rigidity per basis weight of the long-fiber nonwoven fabric, which is obtained from the following equations, is 0.050 to 1.000 ((cN/2 cm)/(g/m$^2$)), and the air permeation rate per basis weight is 0.010 to 0.500 ((cc/cm$^2$/sec)/(g/m$^2$)).

$$\text{Circular arc flexural rigidity per basis weight } ((cN/2\ cm)/(g/m^2)) = \text{circular arc flexural rigidity } (cN/2\ cm)/\text{basis weight } (g/m^2)$$

$$\text{Air permeation rate per basis weight } ((cc/cm^2/sec)/(g/m^2)) = \text{air permeation rate } (cc/cm^2/sec)/\text{basis weight } (g/m^2)$$

9. The method for producing a nonwoven fabric for cylindrical bag filter according to claim 7 or 8, wherein the thermoplastic continuous filament is a complex-type filament in which a low-melting-point polyester polymer is arranged around a high-melting-point polyester polymer.

10. The method for producing a nonwoven fabric for cylindrical bag filter according to any of claims 7 to 9, wherein the thermoplastic continuous filament is an interwoven-type filament made of a filament made of a high-melting-point polyester polymer and a low-melting-point polyester polymer.

11. The method for producing a nonwoven fabric for cylindrical bag filter according to any of claims 7 to 10, wherein the pressure welding treatment with the flat roll includes the steps of heat-pressure welding the fiber web with a pair of flat rolls to form a nonwoven fabric and bringing the nonwoven fabric into contact with the flat roll successively starting from a heat-pressure weld portion.

12. A cylindrical bag filter wherein the nonwoven fabric according to claim 1 is molded into a cylindrical shape.

## INTERNATIONAL SEARCH REPORT

| | International application No. |
|---|---|
| | PCT/JP2008/059772 |

A. CLASSIFICATION OF SUBJECT MATTER
*B01D39/16*(2006.01)i, *B01D39/14*(2006.01)i, *D04H3/00*(2006.01)i, *D04H3/07*
(2006.01)i, *D04H3/14*(2006.01)i

According to International Patent Classification (IPC) or to both national classification and IPC

B. FIELDS SEARCHED

Minimum documentation searched (classification system followed by classification symbols)
B01D39/16, B01D39/14, D04H3/00, D04H3/07, D04H3/14

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | Microfilm of the specification and drawings annexed to the request of Japanese Utility Model Application No. 096727/1982(Laid-open No. 002407/1984) (Ichikawa Keori Kabushiki Kaisha), 09 January, 1984 (09.01.84), Claims (Family: none) | 1,12 |
| X | JP 2001-248056 A (Unitika Ltd.), 14 September, 2001 (14.09.01), Par. Nos. [0005] to [0009], [0017], [0020], [0028], [0031], [0032], [0045] to [0050]; table 1 (Family: none) | 1-6,12 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 July, 2008 (11.07.08) | 22 July, 2008 (22.07.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**EP 2 151 270 A1**

**INTERNATIONAL SEARCH REPORT**

International application No.

PCT/JP2008/059772

C (Continuation).   DOCUMENTS CONSIDERED TO BE RELEVANT

| Category* | Citation of document, with indication, where appropriate, of the relevant passages | Relevant to claim No. |
|---|---|---|
| A | JP 08-100371 A  (Toray Industries, Inc.),<br>16 April, 1996 (16.04.96),<br>Full text<br>(Family: none) | 7-11 |

Form PCT/ISA/210 (continuation of second sheet) (April 2007)

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3534043 B
- JP 11158776 A
- JP 2004076212 A
- JP 2006150222 A
- JP 2007105655 A